(19) 

Europäisches
Patentamt
European
Patent Office
Office européen
des brevets

(11) **EP 4 257 280 A1**

(12) **EUROPEAN PATENT APPLICATION**
published in accordance with Art. 153(4) EPC

(43) Date of publication:
**11.10.2023 Bulletin 2023/41**

(21) Application number: **21915007.5**

(22) Date of filing: **19.11.2021**

(51) International Patent Classification (IPC):
***B23K 26/32*** (2014.01)     ***B23K 26/12*** (2014.01)
***B23K 26/21*** (2014.01)

(52) Cooperative Patent Classification (CPC):
**B23K 26/12; B23K 26/21; B23K 26/32**

(86) International application number:
**PCT/JP2021/042570**

(87) International publication number:
**WO 2022/145146 (07.07.2022 Gazette 2022/27)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **04.01.2021  JP 2021000178**

(71) Applicant: **JFE Steel Corporation
Tokyo 100-0011 (JP)**

(72) Inventors:
• **HARA, Asato
Tokyo 100-0011 (JP)**
• **KITANI, Yasushi
Tokyo 100-0011 (JP)**

(74) Representative: **Haseltine Lake Kempner LLP
Bürkleinstrasse 10
80538 München (DE)**

(54) **LASER WELDING METHOD FOR SILICON-CONTAINING STEEL SHEETS, AND LASER WELDING APPARATUS**

(57)     A laser welding method and a laser welding apparatus used for this method are proposed. In the laser welding method, when Si-containing steel sheets are passed through a continuous processing line, a tail end of a preceding steel sheet and a leading end of a succeeding steel sheet are placed in contact with each other on a line entry side, and while a filler wire is supplied to a contact part, laser is applied and a filler is melted and solidified to weld the Si-containing steel sheets together. This method can reduce the hardness of welded metal more than conventional technologies, to 350 HV0.2 or lower, by injecting a shielding gas containing a He gas or an Ar gas and further containing at least one type selected from a $CO_2$ gas and an $N_2$ gas by 10 vol% or higher and 30 vol% or lower in total to a front surface and a back surface of a part being welded, achieving hardness of welded metal HV0.2 of 350 or lower.

FIG. 1

EP 4 257 280 A1

**Description**

Technical Field

The present invention relates to a laser welding method in which Si-containing steel sheets are joined together with a tail end of a preceding steel sheet and a leading end of a succeeding steel sheet placed in contact with each other on an entry side of a line that continuously processes the steel sheets, and to an apparatus for this method.

Background Art

In the field of iron manufacturing, a form of continuously processing steel sheets has in recent years become mainstream for hot rolling mills, pickling facilities, cold rolling mills, annealing facilities, etc. that manufacture steel sheets. In such lines that continuously process steel sheets, to thread the steel sheets to be processed through the line without interruption, it is necessary to place a tail end of a preceding steel sheet and a leading end of a succeeding steel sheet in contact with each other to weld and join the contact portion on an entry side of the line. Flash butt welding and laser welding are often used to weld the steel sheets together. In particular, hard-to-roll materials that are hard and have poor toughness, such as electrical steel sheets and stainless steel sheets, are often joined by laser welding.

In laser welding, laser light emitted by an oscillator is transmitted through an optical path, focused to an appropriate size by a focusing lens, and applied to a contact part between the steel sheets. The steel sheets are heated and melted at the contact part by the applied laser light, and then cool and solidify to form a weld. In this process, an inert gas, such as Ar or He, is commonly supplied as a shielding gas to the front and back surfaces of the part being joined to thereby prevent oxidation of the melted metal, as described in Non Patent Literature 1.

However, a weld of steel sheets is rapidly cooled to harden after laser welding, so that sufficient toughness cannot be secured. Especially, a weld of steel sheets high in Si content undergoes significant embrittlement, and this tendency becomes more noticeable as the Si content becomes higher. Thus, in a line for joining Si-containing steel sheets together by laser welding, the sheets may fracture at the weld while being passed. If the sheets fracture while being passed, it takes a long time to recover, causing a significant decrease in operation rate and productivity. In rolling mills etc., this also leads to a higher unit consumption of rolls as the rolls get damaged.

As a technology to solve this problem, Patent Literature 1 discloses a technology in which, when welding Si-containing steel sheets together, a filler is added to a part being joined and thus the Si concentration in the welded metal is lowered to obtain a weld joint (weld) having excellent toughness. This literature discloses that this technology can prevent not only embrittlement of the weld but also such a situation that coarse ferrite forms at the weld to cause deterioration in mechanical characteristics or that crystal grains in a heat-affected zone coarsen and make the weld prone to fracture.

Citation List

Patent Literature

Patent Literature 1: JP-H05-305466

Non Patent Literature

Non Patent Literature 1: Takeji Arai, Muneharu Kutsuna, and Isamu Miyamoto, "Laser Welding Processing," Amada Reza Kako Kenkyukai, published in 1996, p. 12-17

Summary of Invention

Technical Problem

The problem is, however, that sheet fracture during cold rolling cannot be completely prevented. For example, in laser-welding of steel sheets containing 1.0 mass% Si or more, the Si concentration is not sufficiently lowered when the filler supply that is added to a part being welded is insufficient, so that the welded metal may become harder than the base material.

Having been contrived in view of this problem with the conventional technology, the present invention aims to propose a laser welding method that can, when laser-welding Si-containing steel sheets together, reduce the hardness of the weld more than conventional technologies can, and to provide a laser welding facility used for this method.

Solution to Problem

To solve the above problem, the present inventors have conducted studies with a focus on a shielding gas that is injected to the front and back surfaces of a part being welded during laser welding. Conventionally, when laser-welding steel sheets together by placing them in contact with each other, a gas composed only of Ar or a gas composed only of He is injected as a shielding gas to the front surface side and the back surface side of a part being welded and thus the part being welded is completely shielded to prevent occurrence of weld defects, such as blowholes, due to inclusion of nitrogen and oxygen from the atmosphere. However, the present inventors found that rationalizing the composition, and further the flow rate, of the shielding gas, specifically, adding at least one selected from a $CO_2$ gas and an $N_2$ gas to a shielding gas composed mainly of a He gas or an Ar gas within such a range that no blowholes occur in the welded metal could stably reduce the hardness of the welded metal part compared with when a gas composed only of Ar or a gas composed only of He was used, which led to the development of the present invention.

The present invention based on this finding proposes a laser welding method for Si-containing steel sheets in which, when Si-containing steel sheets are passed through a continuous processing line, a tail end of a preceding steel sheet and a leading end of a succeeding steel sheet are placed in contact with each other on a line entry side, and while a filler wire is supplied to the contact part, laser is applied and a filler is melted and solidified to weld the Si-containing steel sheets together. This laser welding method is characterized in that, a shielding gas containing a He gas or an Ar gas and further containing at least one type selected from a $CO_2$ gas and an $N_2$ gas by 10 vol% or higher and 30 vol% or lower in total is injected to a front surface and a back surface of a part being welded to achieve hardness of welded metal HV0.2 of 350 or lower.

Further, the laser welding method for Si-containing steel sheets of the present invention is characterized in that the filler wire used in the method contains Si by 0.5 mass% or lower.

The present invention also includes a laser welding apparatus for Si-containing steel sheets having: a laser irradiation unit that irradiates the contact part of Si-containing steel sheets with laser emitted from a laser oscillator; a filler wire supply device that supplies a filler wire to the contact part; a shielding gas injector that shields a part being welded by injecting a shielding gas composed mainly of He or Ar to front and back surfaces of the contact part; and a control unit that controls the laser irradiation unit, the filler wire supply device, and the shielding gas injector. This laser welding apparatus is characterized in that the control unit functions to control the shielding gas composed mainly of He or Ar to contain at least one type selected from a $CO_2$ gas and an $N_2$ gas by 10 vol% or higher and 30 vol% or lower in total.

Advantageous Effects of Invention

In laser-welding Si-containing steel sheets that contain 1.0 mass% or higher Si, even when filler supply is insufficient and the Si concentration at a part being welded is not sufficiently lowered, the present invention can stably reduce the hardness of the weld to 350 or lower as HV0.2 and thereby significantly reduce the sheet fracture while the sheets are passed through a continuous processing line. In addition, the technology of the present invention involves simply adjusting the composition and the flow rate of the shielding gas, and therefore can be implemented also in existing laser welding facilities.

Brief Description of Drawings

FIG. 1 is a diagram showing one example of a laser welding apparatus used for the present invention.
FIG. 2 is a graph comparing incidence rates of sheet fracture at a weld in a conventional welding method and welding methods of the present invention.

Description of Embodiment

First, a laser welding method of the present invention will be described.

The laser welding method of the present invention is a technology relating to a laser welding method in which, when Si-containing steel sheets are passed through a continuous processing line, a tail end of a preceding steel sheet and a leading end of a succeeding steel sheet are placed in contact with each other on a line entry side, and while a filler wire is supplied to the contact part, laser is applied and the filler is melted and solidified to weld the Si-containing steel sheets together.

Here, the Si-containing steel sheet refers to a steel sheet that contains 1.0 mass% or higher Si, and may be whichever of a hot-rolled steel sheet and a cold-rolled steel sheet. To reap more of the advantages of the present invention, the Si-containing steel sheet is preferably a steel sheet containing Si by 3.0 mass% or higher.

The continuous processing line refers to a line that continuously processes Si-containing steel sheets, and may be any one of a hot-rolling facility, pickling facility, cold-rolling facility, washing facility, continuous annealing facility, temper rolling facility, finishing facility, etc., provided that the line continuously processes Si-containing steel sheets by laser-welding a tail end of a preceding steel sheet and a leading end of a succeeding steel sheet together on the line entry side.

In the laser welding, it is common practice to inject an inert gas, such as a gas composed only of He or a gas composed only of Ar, to the front and back surfaces of a part being welded (contact part) and thus shield the part being welded to prevent oxidation of the welded metal part and prevent energy input into the material from decreasing as plasma is generated due to separation of metallic vapor or gas present at a part being irradiated with laser. This shielding gas is one of the important parameters that affect the characteristics of a weld in laser welding.

Here, the laser welding method of the present invention is characterized in that, instead of the gas composed only of He, the gas composed only of Ar, or the like, a mixed gas that is composed mainly of He or Ar and contains at least one type selected from a $CO_2$ gas and an $N_2$ gas by 10 vol% or higher and 30 vol% or lower in total is used as the shielding gas. Using this shielding gas decreases the hardness of the weld compared with using a gas composed only of He or a gas composed only of Ar. Specifically, it is possible to reduce the maximum hardness of welded metal to 350 or lower as measured as HV0.2 stipulated in JIS Z 2244 (2009). However, blowholes start to occur when exceeding 30 vol%, and therefore the upper limit is 30 vol%. A preferable range of the total content of the $CO_2$ gas and the $N_2$ gas is 15 to 25 vol%.

It has not yet been sufficiently clarified why the hardness of a weld decreases when a mixed gas of He or Ar and at least one type selected from a $CO_2$ gas and an $N_2$ gas is used as the shielding gas as described above, but this is considered because strengthening elements in the welded metal are precipitated as carbides and nitrides.

When a He gas and an Ar gas are compared, the He gas has a higher ionization voltage and is less likely to generate plasma, which makes the He gas more preferable as a main component gas.

In the laser welding method of the present invention, it is preferable that the total flow rate of the shielding gas to be injected to the front and back surfaces of the part being welded be reduced to 80 to 90, when defining the flow rate in the case of using a gas composed only of He or a gas composed only of Ar as 100. Thus, the hardness reducing effect of the mixed gas on the weld can be further enhanced. This is presumably because the shielding effect on the part being welded can be appropriately weakened and the amounts of oxygen and nitrogen in the welded metal can be increased. A more preferable flow rate is within a range of 85 to 90, when defining the flow rate in the case of using a gas composed only of He or a gas composed only of Ar as 100.

In the laser welding method of the present invention, to lower the Si concentration at the weld between Si-containing steel sheets and reduce the hardness of the welded metal, it is preferable that a filler wire containing Si by 0.5 mass% or lower be used as the filler wire to be fed to the part being welded. The content is more preferably 0.1 mass% or lower. For example, WEL MIG (Registered trademark) 625 or the like can be suitably used.

Next, a laser welding apparatus of the present invention will be described.

The laser welding apparatus of the present invention has: a laser irradiation unit that irradiates a contact part of Si-containing steel sheets with laser emitted from a laser oscillator; a filler wire supply device that supplies a filler wire to the contact part; a shielding gas injector that shields a part being welded by injecting a shielding gas composed mainly of He or Ar to the front and back surfaces of the contact part; and a control unit that controls the laser irradiation unit, the filler wire supply device, and the shielding gas supply device. This laser welding apparatus is characterized in that the control unit functions to control the shielding gas composed mainly of He or Ar to contain at least one type selected from a $CO_2$ gas and an $N_2$ gas by 10 vol% or higher and 30 vol% or lower in total.

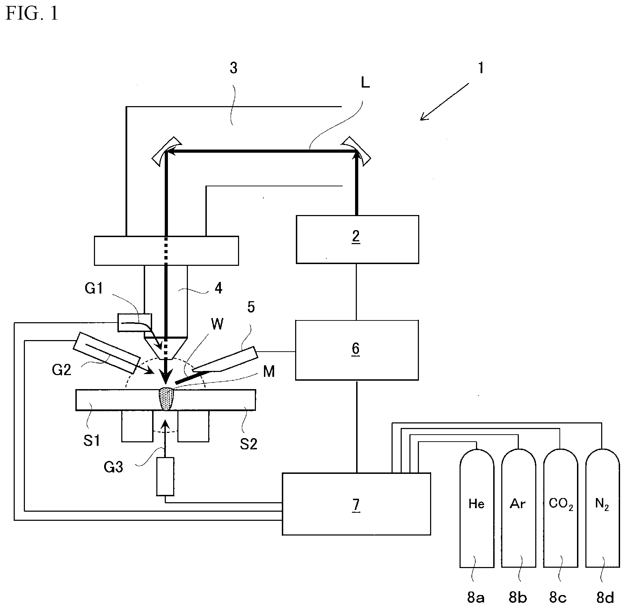

FIG. 1 shows one example of the laser welding apparatus used for laser welding of the present invention that is installed on an entry side of a steel sheet continuous processing line. The laser welding apparatus 1 includes: a laser irradiation unit that guides a laser beam L emitted from a laser oscillator 2 to a focusing unit (focusing lens) 4 through a light guide path 3, focuses the laser beam L by the focusing lens 4, and then applies the laser beam L to a contact part of a preceding steel sheet S1 and a succeeding steel sheet S2; a filler wire supply device 5 that supplies a filler wire W to the contact part; a shielding gas injector that shields a part being welded by injecting a shielding gas mainly composed of He or Ar to the front and back surfaces of the contact part; and a control unit 6 that controls the constituent units of the welding apparatus 1, namely the laser irradiation unit, the filler wire supply device 5, and the shielding gas injector, using an arithmetic processing unit, such as a CPU, that executes processing programs. The filler wire W and the contact part of the two steel sheets S1, S2 are melted by the laser beam applied to the contact part, and then solidify to form a weld M.

The shielding gas injector in FIG. 1 above includes a center gas G1 that is injected to the front surface side of the contact part between the steel sheets on the same axis as the laser beam L, a side gas G2 that is injected to the front surface side of the contact part from a lateral side, and a back gas G3 that is injected to the back surface side of the contact part, and the composition and the amount to be injected of each shielding gas to be injected are controlled by the control unit 6.

Here, one thing that is important in the laser welding apparatus of the present invention is that the control unit 6 controls the gas composition of the shielding gas. Specifically, the control unit 6 mixes and adjusts He, Ar, $CO_2$, and $N_2$ gases supplied respectively from a He gas cylinder 8a, an Ar gas cylinder 8b, a $CO_2$ gas cylinder 8c, and an $N_2$ gas cylinder 8d shown in FIG. 1 in a shielding gas mixing unit 7 such that the shielding gas contains a He gas or an Ar gas and at least one type selected from the $CO_2$ gas and the $N_2$ gas by 10 vol% or higher and 30 vol% or lower in total. As long as the total content of the $CO_2$ gas and the $N_2$ gas is within this range, the gas contained in the shielding gas mainly composed of a He gas or an Ar gas may be only the $CO_2$ gas or only the $N_2$ gas. Thus, hardness of the welded metal of 350 or lower as HV0.2 can be achieved without causing weld defects, such as blowholes, at the weld.

Another thing that is important in the laser welding apparatus of the present invention is that the control unit 6 has a flow rate adjustment function of reducing the flow rate of the shielding gas (the total flow rate of G1, G2, and G3) to within a range of 80 to 90, with the flow rate when using a gas composed only of He or a gas composed only of Ar as the shielding gas being 100. Thus, the hardness reducing effect of the gas composition control on the welded metal can be further enhanced. As a footnote, the total flow rate of the shielding gases G1, G2, and G3 when using a gas composed only of He or a gas composed only of Ar as the shielding gas in the laser welding apparatus as shown in FIG. 1 is usually about 150 to 200 L/min.

While FIG. 1 shows an example of the configuration of a welding apparatus that uses carbon dioxide laser as the laser used for welding, the laser in the present invention is not limited to carbon dioxide laser and disc laser, fiber laser, etc. may be used. When using disc laser, fiber laser, or YAG laser, the center gas G1 is not needed as these lasers have short wavelengths and are less likely to generate plasma.

Further, the laser welding method of the present invention is a technology of reducing the maximum hardness of a weld to 350 or lower as HV0.2 without causing weld defects by rationalizing the gas composition and the flow rate of the shielding gas as described above. Thus, sheet fracture occurring at a weld when steel sheets are welded together and continuously passed through a continuous processing line can be drastically reduced.

Example 1

An experiment was conducted in which Si-containing steel sheets having a sheet thickness of 2.0 to 2.2 mm and containing 3.0 to 3.5 mass% Si were welded together while the composition and the flow rate of the shielding gas during welding were changed to various values as shown in Table 1 in a laser welding apparatus of the present invention as shown in FIG. 1 by installing the steel sheets on an entry side of a line that continuously processes these steel sheets.

Specifically, two steel sheets taken from the aforementioned steel sheets are placed in contact with each other and laser-welded while WEL MIG (Registered Trademark) 625 containing 0.10 mass% Si was fed as a filler wire. Carbon dioxide laser was used as the laser used for welding, and welding was performed under the conditions of output power of 10 kW, a beam diameter of 0.5 mm, a welding speed of 3.0 m/min, and a filler wire supply speed of 5.5 m/min.

Laser welds thus obtained as above were evaluated as follows.

<Appearance Evaluation>

Weld beads were visually observed to check for presence or absence of blowholes, and those in which blowholes were absent were evaluated as acceptable.

<Evaluation of Hardness of Weld>

The welds were cut in a crosswise direction and the Vickers hardness HV0.2 of a central portion in the sheet thickness and the melted width of the cross-section was measured. Those welds of which the maximum hardness was 350 or lower were evaluated as acceptable.

The evaluation result is included in Table 1 that lists the welding conditions.

According to this result, under the welding conditions of the conventional technology that uses a 100% He gas as the shielding gas, the Vickers hardness HV0.2 of the welded metal is far higher than 350, while when a mixed gas of a He gas and at least one type selected from a $CO_2$ and an $N_2$ gas by 10 vol% or higher in total is used, HV0.2 can be reduced to 350 or lower. However, when at least one type selected from a $CO_2$ and an $N_2$ gas is contained by 30 vol% or higher in total, while HV0.2 of the welded metal decreases further, blowholes start to occur in the weld bead. This demonstrates the need to use a shielding gas containing a He gas and at least one type selected from a $CO_2$ and an $N_2$ gas by 10 vol% or higher and 30 vol% or lower in total. In addition, it was found that while the $CO_2$ gas and the $N_2$ gas are almost equivalent in hardness reducing effect on welded metals, the effect is slightly higher with the $CO_2$ gas.

It can be seen that in the case where the composition of the shielding gas meets the aforementioned range, when the total flow rate of the shielding gas injected to the front and back surfaces of the part being welded is reduced to within a range of 80 to 90, with the flow rate of the shielding gas when using a 100% He gas as the shielding gas being 100, can further reduce the hardness of the welded metal.

It was also confirmed that almost the same effect could be achieved when an Ar gas, instead of a He gas, was used as the main component of the shielding gas.

[Table 1]

| No. | Shielding gas composition (vol%) | | | | | Shielding gas flow rate (L/min) | | | | Evaluation of weld | | Remarks |
|---|---|---|---|---|---|---|---|---|---|---|---|---|
| | He | Ar | CO$_2$ | N$_2$ | CO$_2$+N$_2$ | Center gas G1 | Side gas G2 | Back gas G3 | Total (*) | Welded metal hardness [HV0.2] | Presence or absence of blowholes | |
| 1 | 100 | - | 0 | 0 | 0 | 50 | 50 | 70 | 170 (100) | 390 | Absent | Reference example (standard) |
| 2 | 95 | - | 2.5 | 2.5 | 5 | 50 | 50 | 70 | 170 (100) | 375 | Absent | Comparative example |
| 3 | 90 | - | 5 | 5 | 10 | 50 | 50 | 70 | 170 (100) | 345 | Absent | Invention Example |
| 4 | 80 | - | 10 | 10 | 20 | 50 | 50 | 70 | 170 (100) | 334 | Absent | Invention Example |
| 5 | 75 | - | 12.5 | 12.5 | 25 | 50 | 50 | 70 | 170 (100) | 322 | Absent | Invention Example |
| 6 | 70 | - | 15 | 15 | 30 | 50 | 50 | 70 | 170 (100) | 310 | Absent | Invention Example |
| 7 | 60 | - | 20 | 20 | 40 | 50 | 50 | 70 | 170 (100) | 277 | Present | Comparative example |
| 8 | 90 | - | 5 | 5 | 10 | 45 | 45 | 63 | 153 (90) | 344 | Absent | Invention Example |
| 9 | 90 | - | 5 | 5 | 10 | 40 | 40 | 56 | 136 (80) | 323 | Absent | Invention Example |
| 10 | 90 | - | 5 | 5 | 10 | 35 | 35 | 49 | 119 (70) | 308 | Absent | Invention Example |
| 11 | 80 | - | 10 | 10 | 20 | 45 | 45 | 63 | 153 (90) | 333 | Absent | Invention Example |
| 12 | 80 | - | 10 | 10 | 20 | 40 | 40 | 56 | 136 (80) | 327 | Absent | Invention Example |
| 13 | 80 | - | 10 | 10 | 20 | 35 | 35 | 49 | 119 (70) | 301 | Absent | Invention Example |

| No. | Shielding gas composition (vol%) | | | | | Shielding gas flow rate (L/min) | | | | Evaluation of weld | | Remarks |
|---|---|---|---|---|---|---|---|---|---|---|---|---|
| | He | Ar | $CO_2$ | $N_2$ | $CO_2+N_2$ | Center gas G1 | Side gas G2 | Back gas G3 | Total (*) | Welded metal hardness [HV0.2] | Presence or absence of blowholes | |
| 14 | 75 | - | 12.5 | 12.5 | 25 | 45 | 45 | 63 | 153 (90) | 326 | Absent | Invention Example |
| 15 | 75 | - | 12.5 | 12.5 | 25 | 40 | 40 | 56 | 136 (80) | 317 | Absent | Invention Example |
| 16 | 75 | - | 12.5 | 12.5 | 25 | 35 | 35 | 49 | 119 (70) | 297 | Absent | Invention Example |
| 17 | 70 | - | 15 | 15 | 30 | 40 | 40 | 56 | 136 (80) | 325 | Absent | Invention Example |
| 18 | 70 | - | 15 | 15 | 30 | 35 | 35 | 49 | 119 (70) | 289 | Absent | Invention Example |
| 19 | 90 | - | 10 | - | 10 | 50 | 50 | 70 | 170 (100) | 347 | Absent | Invention Example |
| 20 | 80 | - | 20 | - | 20 | 50 | 50 | 70 | 170 (100) | 336 | Absent | Invention Example |
| 21 | 75 | - | 25 | - | 25 | 50 | 50 | 70 | 170 (100) | 327 | Absent | Invention Example |
| 22 | 90 | - | - | 10 | 10 | 50 | 50 | 70 | 170 (100) | 339 | Absent | Invention Example |
| 23 | 80 | - | - | 20 | 20 | 50 | 50 | 70 | 170 (100) | 321 | Absent | Invention Example |
| 24 | 75 | - | - | 25 | 25 | 50 | 50 | 70 | 170 (100) | 317 | Absent | Invention Example |
| 25 | - | 80 | 20 | - | 20 | 40 | 40 | 56 | 136 (80) | 311 | Absent | Invention Example |
| 26 | - | 80 | - | 20 | 20 | 40 | 40 | 56 | 136 (80) | 302 | Absent | Invention Example |

*: Ratio (%) with a 100% He gas being 100

EP 4 257 280 A1

Example 2

In a tandem cold mill in which Si-containing steel sheets having a sheet thickness within a range of 2.0 to 2.2 mm and containing Si at a ratio within a range of 3.0 to 3.5 mass% were cold-rolled after being laser-welded on the line entry side by the laser welding machine shown in FIG. 1, with a tail end of a preceding steel sheet and a leading end of a succeeding steel sheet placed in contact with each other, a process experiment was conducted in which the laser welding methods of the present invention (No. 8 and 12) and the laser welding method of the conventional technology (No. 1) listed in Table 1 described earlier were applied as the laser welding and the rates of occurrence of coils that developed sheet fracture at the weld while being cold-rolled were compared. The same filler wire as in Example 1 was used, and laser welding was conducted under the conditions of output power of 10 kW, a beam diameter of 0.5 mm, a welding speed of 3.0 m/min, and a filler wire supply speed of 5.5 m/min. To compare the three welding methods, the configurations, such as the sheet thickness and the steel type (Si content), of the steel sheets to be rolled in the respective methods were adjusted so as to be almost the same, and the incident rate of sheet fracture at the weld was obtained by the following formula:

$$\text{Incident rate of sheet fracture (\%)} = \text{(number of coils that developed}$$

$$\text{sheet fracture) / (total number of coils rolled)} \times 100$$

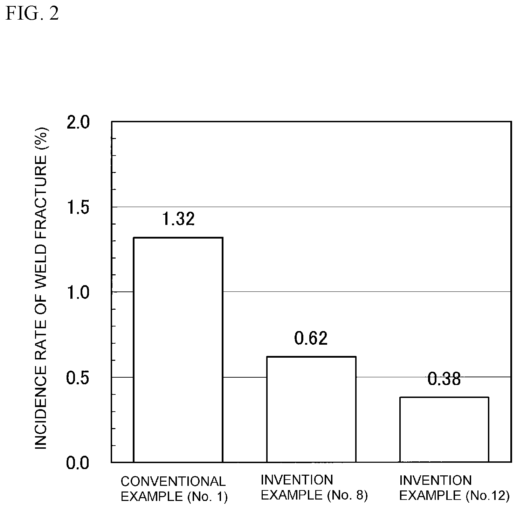

The result is shown in FIG. 2. It can be seen from this graph that applying the laser welding methods of the present invention can reduce the incident rate of sheet fracture at the weld by half or more.

Industrial Applicability

The technology of the present invention can be applied not only to laser welding facilities in which Si-containing steel sheets are installed on an entry side of a continuous processing line but also suitably to independent laser welding apparatuses. In addition, it is possible to apply the technology of the present invention to welding of steel sheets other than Si-containing steel sheets that are prone to sheet fracture at welds.

Reference Signs List

1: Laser welding apparatus
2: Laser oscillator
3: Light guide path
4: Condensing unit
5: Filler wire supply device
6: Control unit
7: Shielding gas mixing unit
8a, 8b, 8c, 8d: Gas cylinder
L: Laser beam
S1, S2: Si-containing steel sheets to be welded together
W: Filler wire
G1, G2, G3: Shielding gas
M: Weld

**Claims**

1. A laser welding method for Si-containing steel sheets in which, when Si-containing steel sheets are passed through a continuous processing line, a tail end of a preceding steel sheet and a leading end of a succeeding steel sheet are placed in contact with each other on a line entry side, and while a filler wire is supplied to a contact part, laser is applied and a filler is melted and solidified to weld the Si-containing steel sheets together,
**characterized in that**,
a shielding gas containing a He gas or an Ar gas and further containing at least one type selected from a $CO_2$ gas and an $N_2$ gas by 10 vol% or higher and 30 vol% or lower in total is injected to a front surface and a back surface of a part being welded to achieve hardness of welded metal HV0.2 of 350 or lower.

2. The laser welding method for Si-containing steel sheets according to claim 1, wherein the filler wire is a wire that contains 0.5 mass% or lower Si.

3. A laser welding apparatus for Si-containing steel sheets, comprising:

a laser irradiation unit that irradiates a contact part of Si-containing steel sheets with laser emitted from a laser oscillator;
a filler wire supply device that supplies a filler wire to the contact part;
a shielding gas injector that shields a part being welded by injecting a shielding gas composed mainly of He or Ar to front and back surfaces of the contact part; and
a control unit that controls the laser irradiation unit, the filler wire supply device, and the shielding gas injector, **characterized in that**
the control unit functions to control the shielding gas composed mainly of He or Ar to contain at least one type selected from a $CO_2$ gas and an $N_2$ gas by 10 vol% or higher and 30 vol% or lower in total.

FIG. 1

FIG. 2

## INTERNATIONAL SEARCH REPORT

| International application No. |
|---|
| **PCT/JP2021/042570** |

**A. CLASSIFICATION OF SUBJECT MATTER**

**B23K 26/32**(2014.01)i; **B23K 26/12**(2014.01)i; **B23K 26/21**(2014.01)i
FI: B23K26/32; B23K26/12; B23K26/21 F

According to International Patent Classification (IPC) or to both national classification and IPC

**B. FIELDS SEARCHED**

Minimum documentation searched (classification system followed by classification symbols)

B23K26/32; B23K26/12; B23K26/21

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | WO 2011/155620 A1 (NIPPON STEEL & SUMITOMO METAL CORP.) 15 December 2011 (2011-12-15) <br> entire text, all drawings | 1-3 |
| A | JP 2016-52680 A (JFE STEEL CORP.) 14 April 2016 (2016-04-14) <br> entire text, all drawings | 1-3 |
| A | JP 2006-75847 A (SUMITOMO METAL INDUSTRIES, LTD.) 23 March 2006 (2006-03-23) <br> entire text, all drawings | 1-3 |
| A | JP 2011-218362 A (NIPPON STEEL CORP.) 04 November 2011 (2011-11-04) <br> entire text, all drawings | 1-3 |
| A | JP 2012-192445 A (NIPPON STEEL CORP.) 11 October 2012 (2012-10-11) <br> entire text, all drawings | 1-3 |

☐ Further documents are listed in the continuation of Box C.  ☑ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **18 January 2022** | **01 February 2022** |

| Name and mailing address of the ISA/JP | Authorized officer |
|---|---|
| **Japan Patent Office (ISA/JP)** <br> **3-4-3 Kasumigaseki, Chiyoda-ku, Tokyo 100-8915** <br> **Japan** | |
| | Telephone No. |

Form PCT/ISA/210 (second sheet) (January 2015)

**INTERNATIONAL SEARCH REPORT**
Information on patent family members

International application No.

**PCT/JP2021/042570**

| Patent document cited in search report | | | Publication date (day/month/year) | Patent family member(s) | | | Publication date (day/month/year) |
|---|---|---|---|---|---|---|---|
| WO | 2011/155620 | A1 | 15 December 2011 | US | 2013/0078031 | A1 | |
| | | | | entire text, all drawings | | | |
| | | | | CN | 102753300 | A | |
| JP | 2016-52680 | A | 14 April 2016 | (Family: none) | | | |
| JP | 2006-75847 | A | 23 March 2006 | (Family: none) | | | |
| JP | 2011-218362 | A | 04 November 2011 | (Family: none) | | | |
| JP | 2012-192445 | A | 11 October 2012 | (Family: none) | | | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP H05305466 B

**Non-patent literature cited in the description**

- **TAKEJI ARAI ; MUNEHARU KUTSUNA ; ISAMU MIYAMOTO.** Laser Welding Processing. *Amada Reza Kako Kenkyukai,* 1996, 12-17